# EUROPEAN PATENT APPLICATION

(11) **EP 2 056 389 A2**
(43) Date of publication of application: **06.05.2009**
(21) Application number: 08167551.4
(22) Date of filing: 24.10.2008
(51) Int. Cl.: H01M 8/06, C01B 3/32

(54) **Evaporator for fuel cell system**

(30) Priority: 30.10.2007 KR 20070109503
(71) Applicant: Samsung SDI Co., Ltd., Suwon-si, Gyeonggi-do (KR)
(72) Inventor: Lee, Sung-Chul, Gyeonggi-do (KR); Kim, Ju-Yong, Gyeonggi-do (KR); Shin, Woo-Cheol, Gyeonggi-do (KR); Lee, Yong-Kul, Gyeonggi-do (KR); Kong, Sang-Jun, Gyeonggi-do (KR); Son, In-Hyuk, Gyeonggi-do (KR); Ahn, Jin-Goo, Gyeonggi-do (KR); Kim, Tae-Keun, Gyeonggi-do (KR)
(74) Representative: Walaski, Jan Filip

(57) **Abstract**

An evaporator for a fuel cell system generating steam used for a steam reforming reaction provides an evaporator including a body having an inner space formed by a hollow for allowing a flow of a fluid, and a plurality of cell barrier members dividing the inner space into a plurality of spaces and having heat conductivity. The spaces include at least one first space for allowing a flow of a flue gas and at least one second space for allowing a flow of water.

## Description

The present invention relate to a fuel cell system, and more particularly, to an evaporator for a fuel cell system that generates steam used for a steam reforming reaction.

Fuel cells form an electricity generating system to generate electrical energy using a hydrocarbon group fuel. Such fuel cells are classified into polymer electrolyte membrane fuel cells and direct oxidation membrane fuel cells. The direct oxidation membrane fuel cell is generally referred to as a direct methanol fuel cell (DMFC).

The polymer electrolyte membrane fuel cell has superior output characteristics, a low operating temperature, and fast starting and response characteristics. The polymer electrolyte membrane fuel cell has been widely used as a portable power source for vehicles, a distributed power source for houses and public buildings, and a mini power source for electronic devices.

A fuel cell system employing the polymer electrolyte membrane fuel cell includes a fuel cell main body, a fuel reformer, a fuel supplier, and an oxidizing agent supplier. The fuel supplier includes a fuel tank and a fuel pump, and the fuel supplier supplies a fuel to the fuel reformer. The fuel reformer generates hydrogen gas by reforming the fuel and supplies the hydrogen gas to the fuel cell main body. The fuel cell main body generates electrical energy by inducing an electrochemical reaction between the hydrogen gas from the fuel reformer and the oxidizing agent gas.

The fuel reformer may include various constituent elements according to a fuel reforming scheme. For a steam reforming reaction, the fuel reformer may include a heat source, a reforming reaction part, and an evaporator. The heat source generates heat, and the reforming reaction part reforms a fuel using the heat energy. The evaporator heats water and generates steam to provide steam to the reforming reaction part used for the steam reforming reaction.

The evaporator of the fuel cell system generally has a tubular shape or a plate shape. However, in the tubular-shaped evaporator, as a cross-sectional flow area is large, an increase of a contact area between water and the evaporator is not proportional to an increase of an amount of flow. That is, the increment of the contact area is smaller than the increment of the amount of flow. Therefore, the evaporator of the tubular shape has a drawback of low heat transfer efficiency. Meanwhile, if the plate-shaped evaporator has a large area to increase a contact area between water and the evaporator, the entire area of the evaporator increases. Accordingly, the fuel cell system cannot be downsized because of the evaporator.

Aspects of the present invention provide an evaporator for a fuel cell system that improves heat transfer efficiency by increasing a contact area between water and an evaporator while reducing a size thereof.

Aspects of the present invention provide an evaporator including a body having a hollow inner space through which a fluid flows, and a plurality of cell barrier members to divide the hollow inner space into a plurality of spaces, the cell barrier members conducting heat between the plurality of spaces. According to aspects of the present invention, the spaces include at least one first space through which a flue gas flows, and at least one second space through which water flows. According to aspects of the present invention, the spaces may be arranged in a plurality of rows and a plurality of columns. According to aspects of the present invention, the cell barrier members may divide a cross-section of the inner space in a lattice shape.

According to aspects of the present invention, the at least one first space may be adjacent to the at least one second space.

According to aspects of the present invention, the at least one first space may include a plurality of first spaces and the at least one second space may include a plurality of second spaces. According to aspects of the present invention, the first spaces and the second spaces may be alternately arranged in a first direction when viewed in the cross-section of the inner space of the body. According to aspects of the present invention, the first spaces and the second spaces may be alternately arranged in a second direction which crosses the first direction when viewed in the cross-section of the inner space of the body.

According to aspects of the present invention, the flue gas may be supplied to the first spaces from a heat source of a reformer that generates heat in the reformer.

According to aspects of the present invention, the first spaces may be adjacently arranged in the second direction crossing the first direction when viewed in the cross-section of the inner space of the body. According to aspects of the present invention, the second spaces may be adjacently arranged in the second direction when viewed in the cross-section of the inner space of the body.

According to aspects of the present invention, the cell barrier members may include first cell barrier members formed in the second direction and spaced from each other in the first direction, and second cell barrier members formed in the first direction and spaced from each other in the second direction.

According to aspects of the present invention, the second cell barrier members may include at least one through-hole formed in a portion of the second cell barrier members that separate the second spaces. According to aspects of the present invention, each of the at least one through-hole may protrude from a surface of the second cell barrier member.

According to aspects of the present invention, the first spaces and the second spaces may be divided by the first cell barrier members and be alternately arranged in the first direction when viewed in a cross-section of the inner space of the body. According to aspects of the present invention, the second spaces may be divided by the second cell barrier members and be arranged one after another in the second direction when viewed in the cross-section of the inner space of the body.

According to aspects of the present invention, the cell barrier members may divide a cross-section of the inner space in a honeycomb structure. According to aspects of the present invention, the first spaces are adjacent to the second spaces. According to aspects of the present invention, the at least one first space and the at least one second space may have cross-sections of hexagonal shapes of the same size.

According to aspects of the present invention, the first spaces and the second spaces may form a first row in the first direction when viewed in a cross-section of the inner space of the body. According to aspects of the present invention, the first spaces and the second spaces may be alternately arranged in the first row.

According to aspects of the present invention, the first spaces and the second spaces may form a second row in the first direction, and the second row may be adjacent to the first row in the second direction. According to aspects of the present invention, the first spaces and the second spaces may be alternately arranged in the second row. According to aspects of the present invention, a first imaginary line may be spaced from a second imaginary line in the first direction. According to aspects of the present invention, the first imaginary line may pass through a center of one of the first spaces of the first row and be formed along the second direction. According to aspects of the present invention, the second imaginary line may pass through a center of one of the second spaces of the second row and be formed along the second direction.

If steam of the same amount is generated by evaporating water of the same amount, the evaporator according to an exemplary embodiment of the present invention has an overall volume that is smaller than the evaporator according to the related art. Thus, in an exemplary embodiment of the present invention, the size of the evaporator can be reduced compared with the related art.

According to the exemplary embodiments of the present invention, a contact area between water and the evaporator can be increased even though they have the same volumes. Thus, more water can be heated compared with the related art.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
FIG. 1 is a schematic diagram of a fuel cell system according to an exemplary embodiment of the present invention;
FIG. 2 is a schematic diagram of a fuel reformer in the fuel cell system shown in FIG. 1;
FIG. 3 is a perspective view of an evaporator for the fuel cell system according to an exemplary embodiment of the present invention;
FIG. 4 is a perspective view of an evaporator for the fuel cell system according to an exemplary embodiment of the present invention;
FIG. 5 is a perspective view of an evaporator for the fuel cell system according to an embodiment of the present invention;
FIG. 6 is a cross-sectional view of the evaporator for the fuel cell system, taken along line VI-VI shown in FIG. 5;
FIG. 7A is an enlarged top plan view of a portion A of a second cell barrier member shown in FIG. 6;
FIG. 7B is a cross-sectional view of the second cell barrier member, taken along line VII-VII shown in FIG. 7A;
FIG. 8 is a perspective view of an evaporator for the fuel cell system according to an exemplary embodiment of the present invention;
FIG. 9 is a perspective view of an evaporator for the fuel cell system according to an exemplary embodiment of the present invention;
FIG. 10 is a cross-sectional view of the evaporator for the fuel cell system, taken along line X-X shown in FIG. 9;
FIG. 11 is a graph showing a temperature of a flue gas passing through the evaporator for the fuel cell system according to the exemplary embodiment of the present invention shown in FIG. 9; and
FIG. 12 is a graph showing a temperature of a flue gas passing through the evaporator for the fuel cell system according to the related art.

Reference will now be made in detail to the present embodiments of the present invention, examples of which are illustrated in the accompanying drawings, wherein like reference numerals refer to the like elements throughout. The embodiments are described below in order to explain the aspects of the present invention by referring to the figures.

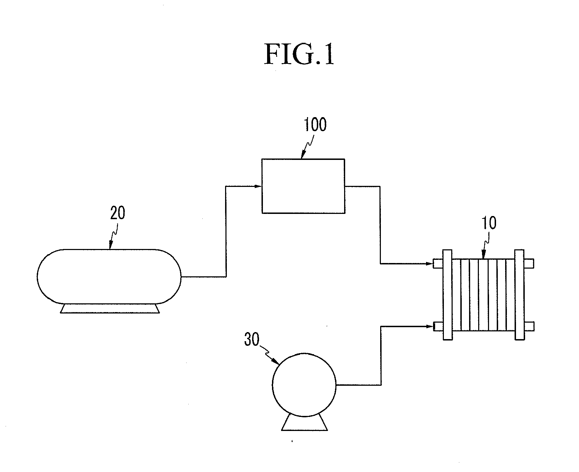

FIG. 1 is a schematic diagram of a fuel cell system according to an exemplary embodiment of the present invention. As shown in FIG. 1, a fuel cell system includes a fuel cell main body 10 to generate electrical energy by inducing an electrochemical reaction of a reformed gas containing hydrogen and an oxidizing agent gas containing oxygen. The fuel cell main body 10 has a stacked structure in which unit cells are consecutively stacked. A unit cell is the minimum unit for generating electrical energy. In general, the stacked structure of the fuel cell main body 10 is referred to as a fuel cell stack. The fuel cell main body 10 is a set of a plurality of consecutively arranged unit cells. End plates are connected to the outermost unit cells of the set.

A fuel supplier 20 includes a fuel tank to store a fuel and a pump to supply the fuel. The fuel supplier 20 supplies the fuel to a fuel reformer 100.

The fuel reforming apparatus 100 receives the fuel from the fuel supplier 20, induces a reforming reaction in the fuel, and generates from the fuel a reformed gas containing hydrogen. The fuel reformer 100 will be described more fully.
An oxidizing agent supplier 30 supplies an oxidizing agent gas to the fuel cell main body 10. The oxidizing agent supplier 30 may supply the air in the atmosphere to the fuel cell main body 10 as an oxidizing agent gas using an air pump.

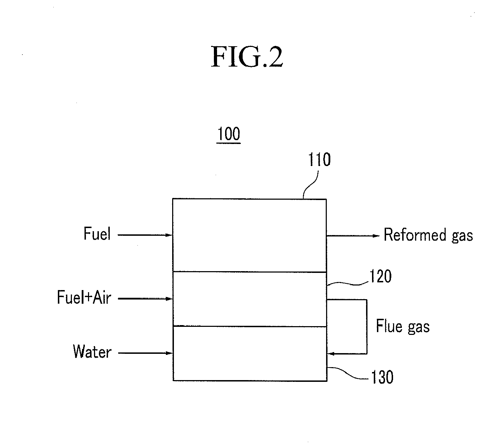

FIG. 2 is a schematic diagram of the fuel reforming apparatus 100 in the fuel cell system shown in FIG. 1. As shown in FIGs. 1 and 2, the fuel reforming apparatus 100 reforms the fuel supplied from the fuel supplier 20 into a reformed gas and provides the reformed gas to the fuel cell body 10. The fuel reforming apparatus 100 may include various constituent elements according to a fuel reforming scheme. The fuel reformer 100 may include a reforming reaction part 110, and a heat source 120, and an evaporator 130 for a steam reforming reaction.

The reforming reaction part 110 facilitates a reforming reaction of a fuel and generates from the fuel a reformed gas containing hydrogen through the reforming reaction of the fuel by using heat energy. The heat source 120 generates heat energy by a combustion reaction induced when a fuel and air are supplied to the heat source 120. The heat source 120 is located adjacent to the reforming reaction part 110, and provides the heat energy to the reforming reaction part 110. The evaporator 130 heats water and generates steam to provide steam used for the steam reforming reaction through a structure described below.

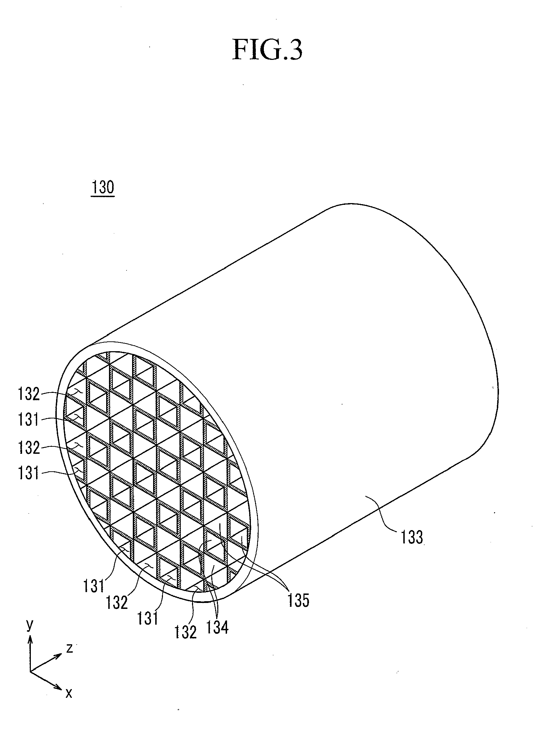

FIG. 3 is a perspective view of the evaporator for the fuel cell system according to an exemplary embodiment of the present invention. As shown in FIG. 3, an inner space of the evaporator 130 is divided into at least one first space 131 and at least one second space 132. A cross-section of the inner space in the evaporator 130 is divided in a lattice shape.

The evaporator 130 has a cylindrical body 133. The cylindrical body 133 has a generally hollow inner space, and, for example, a fluid flows along a length direction of the cylindrical body 133 in the inner space of the cylindrical body 133. Cell barrier members 134 and 135 divide the cross-section of the inner space of the cylindrical body 133 into a lattice shape. Thus, the inner space of the cylindrical body 133 is divided into a plurality of spaces having a plurality of rows and columns. The spaces, divided by the cell barrier members 134 and 135, include the at least one first space 131 to allow a flow of a flue gas and the at least one second space 132 to allow a flow of water. In this embodiment, a plurality of first and second spaces 131 and 132 are included as an example.

The first spaces 131 are adjacent to the second spaces 132. Heat exchange between the flue gas and the water respectively flowing in the first and second spaces 131 and 132 occurs through the cell barrier members 134 and 135. The cell barrier members 134 and 135 may be made of a material having high heat conductivity.

In this embodiment, the cell barrier members 134 and 135 include first cell barrier members 134 and second cell barrier members 135. The first cell barrier members 134 are spaced from each other in a first direction (x axis direction in FIG. 3) and are formed in a second direction (y axis direction in FIG. 3) crossing the first direction. The second cell barrier members 135 are spaced from each other in the second direction and are formed in the first direction. A pair of the first cell barrier members 134 and a pair of the second cell barrier members 135 form a metal monolith. However, aspects of the present invention are not limited thereto. For example, the first and second directions need not be perpendicular such that pathways for fluid flow are not square shaped as shown in FIG. 3. Further, there may be included an increased number of cell barrier members so as to decrease the cross-sectional area of the pathways for fluid flow or change the shape of the cross-sections of the pathways for fluid flow.

The first spaces 131 and the second spaces 132 are alternately arranged in the first direction when viewed in the cross-section of the inner space of the body 133. The first spaces 131 and the second spaces 132 are alternately arranged in the second direction when viewed in the cross-section of the inner space of the body 133. Since the second spaces 132 are surrounded by the first spaces 131 because of the above structure, a heat exchange area of the embodiment can be increased, compared with the tubular shaped or plate-shaped evaporator according to the related art.

A high temperature flue gas that is discharged after a combustion reaction generated in the fuel cell system is supplied to the first spaces 131. The flue gas used may be supplied from the heat source 120 disposed to adjoin to the evaporator 130 for a structural advantage, as shown in FIG. 2.

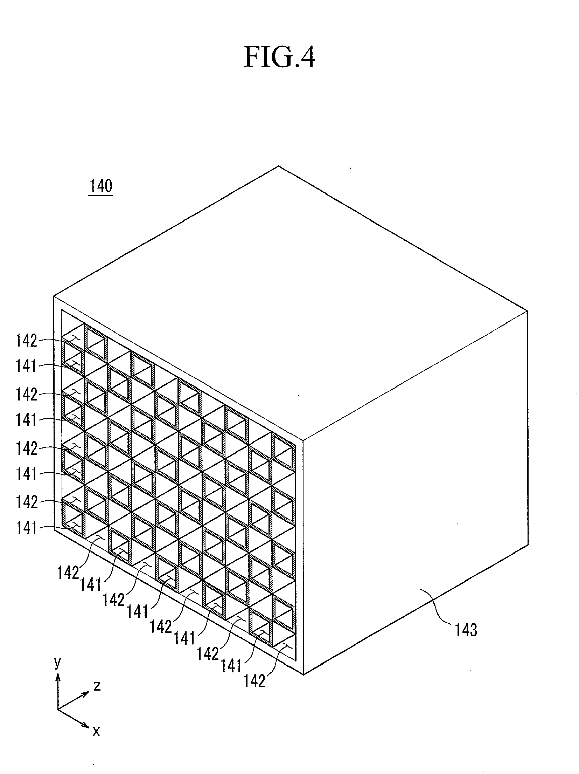

FIG. 4 is a perspective view of an evaporator 140 for the fuel cell system according to an exemplary embodiment of the present invention. In the evaporator 140 shown in FIG. 4, a hollow inner space of a body 143 of the evaporator 140 is divided into first spaces 141 and second spaces 142, as in the evaporator 130 of FIG 3. A cross-section of the inner space in the evaporator 140 is also divided in a lattice shape. However, the evaporator 140 of FIG. 4 includes the body 143 having an elongated rectangular prism shape instead of a cylindrical shape. Aspects of the present invention are not limited thereto, and thus the cross-section of the body 143 can be varied.

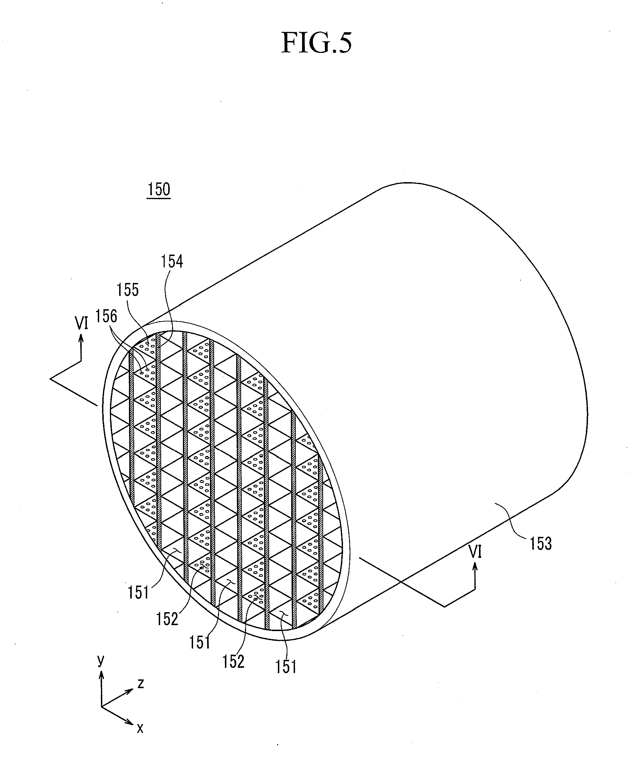

FIG. 5 is a perspective view of an evaporator 150 for the fuel cell system according to an exemplary embodiment of the present invention. Referring to FIG. 5, the evaporator 150 has a cylindrical body 153 having a hollow inner space, which is divided into first spaces 151 and second spaces 152, similar to the evaporator 130 of FIG. 3. A cross-section of the inner space in the evaporator 150 is also divided in a lattice shape. However, the evaporator 150 of FIG. 5 is different from the evaporator 130 of FIG. 3 in the arrangement of the first spaces and the second spaces. Also, the evaporator 150 of FIG. 5 is different in that at least one through-hole 156 is formed on a cell barrier member.

The first spaces 151 and the second spaces 152 are alternately arranged in a first direction (x axis direction in FIG. 5) when viewed in the cross-section of the inner space of the cylindrical body 153. The first spaces 151 and the second spaces 152 are not alternately arranged in a second direction (y axis direction) which crosses the first direction when viewed in the cross-section of the inner space of the cylindrical body 153 such that a space adjacent to one of the first spaces 151 in the second direction is another one of the first spaces 151, and a space adjacent to one of the second spaces 152 in the second direction is another one of the second spaces 152.

Cell barrier members 154 and 155 that divide the inner space of the cylindrical body 153 into the first and second spaces 151 and 152 include first cell barrier members 154 and second cell barrier members 155. The first cell barrier members 154 are spaced from each other in the first direction and are formed in the second direction, and the second cell barrier members 155 are spaced from each other in the second direction and are formed in the first direction. The second cell barrier members 155 are provided with the at least one through-hole 156. The at least one through-hole 156 may include a plurality of through-holes 156. Further, only the second cell barrier members 155 that separate the second spaces 152 are provided with the at least one through-hole 156, but aspects of the present invention are not limited thereto.

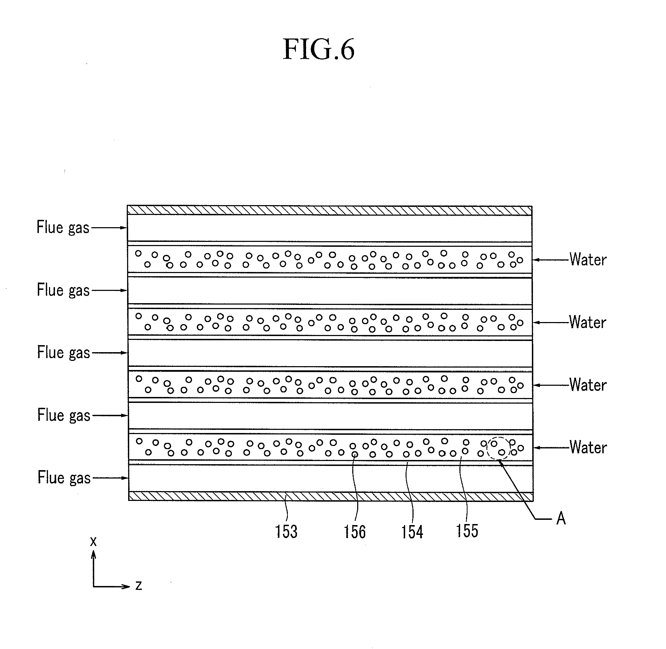

FIG. 6 is a cross-sectional view of the evaporator for the fuel cell system, taken along line VI-VI shown in FIG. 5. As shown in FIGs. 5 and 6, the at least one through-hole 156 is formed on a portion of the second cell barrier member 155 dividing the second spaces 152. Thus, the water flowing in the adjacent second spaces 152 is easily mixed through the through-holes 156. Although the evaporator 150 is shown in FIG. 5 as having the first spaces 151 and the second spaces 152 stacked in a vertical direction, such orientation is not necessary in that the first spaces 151 may be adjacent to other first spaces in a horizontal direction (i.e., x axis direction in FIG. 5) while the second spaces 152 are adjacent to other second spaces 152 in the horizontal direction such that the through-hole 156 fluidly connects the second spaces 152 in the horizontal direction.

Since heat is transferred from the flue gas flowing in the first spaces 151 to the second cell barrier members 155 in the evaporator 150, a heat transfer area is larger than that of the evaporator according to the related art. In addition, according to the evaporator 150 of FIG. 5, the water of the second spaces 152 is easily mixed, and thus a heat temperature deviation of the water generated at the plurality of the second spaces 152 can be reduced.

The through-holes 156 may be formed by punching. The cell barrier members 154 and 155 of the evaporator 150 may be formed of a metal monolith using a punched sheet. Also, the cell barrier members 154 and 155 are formed of a metal material to have high heat conductivity. A flue gas provided from a heat source flows into the first spaces 151.

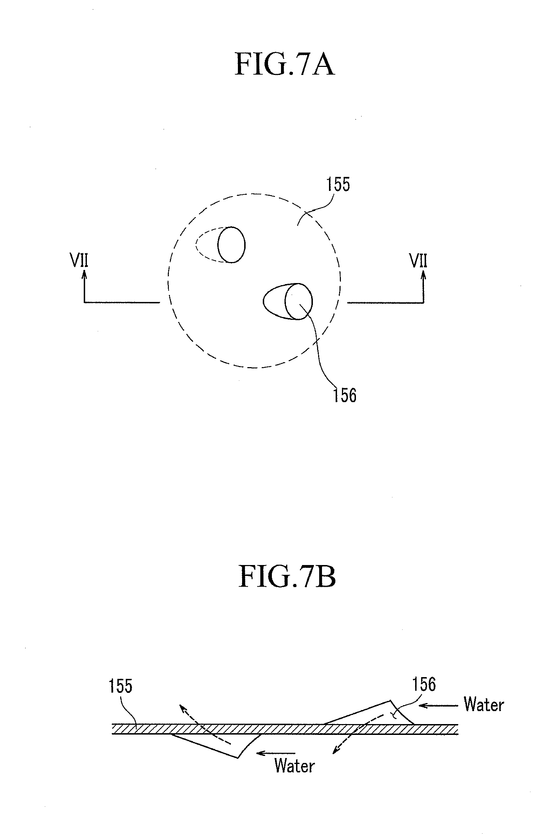

FIG. 7A is an enlarged top plan view of a portion A of the second cell barrier members 155 shown in FIG. 6, and FIG. 7B is a cross-sectional view of the second cell barrier member 155, taken along line VII-VII shown in FIG. 7A.

As shown in FIGs. 7A and 7B, the through-holes 156 protrude from surfaces of the second cell barrier members 155. Thus, water flowing in one of the second spaces 152 can pass through the through-hole 156 and flow into the adjacent one of the second spaces 152. However, the through-holes 156 need not be limited thereto such that the through-holes 156 may merely comprise holes that do not protrude from the surfaces of the second cell barrier members 155.

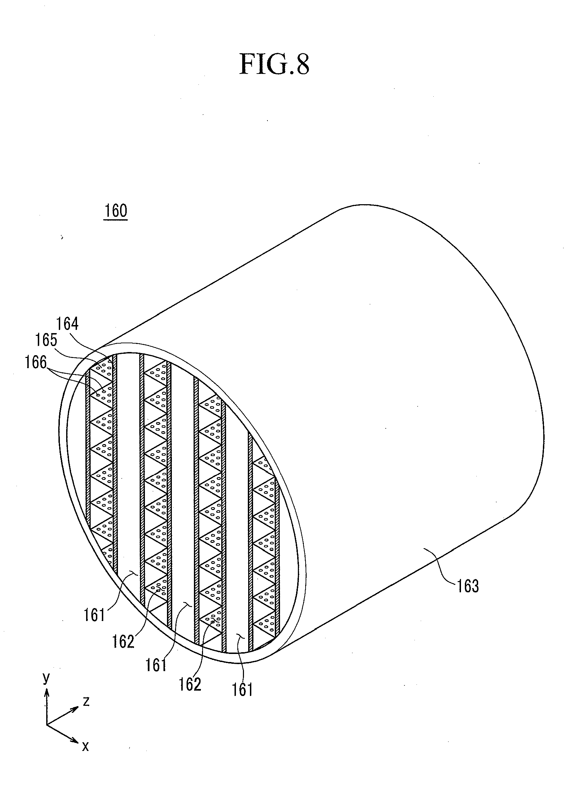

FIG. 8 is a perspective view of an evaporator 160 for the fuel cell system according to an exemplary embodiment of the present invention. As shown in FIG. 8, the evaporator 160 is partially different from the evaporator 150 of in FIG. 6. A hollow inner space of the evaporator 160 is divided into first spaces 161 and second spaces 162. The first spaces 161 and the second spaces 162 are divided by first cell barrier members 164 and are alternately arranged in a first direction (x axis direction in FIG. 8) when viewed in a cross-section of the inner space of a body 163. Although the body 163 is illustrated as a cylindrical body, the body 163 is not limited thereto. The second spaces 162 are divided by second cell barrier members 165 and are arranged adjacent to one another in a second direction (y axis direction in FIG. 8) when viewed in the cross-section of the inner space of the body 163. Although the evaporator 160 of FIG. 8 is not provided with the cell barrier member formed in the first direction and dividing the first spaces 161 in the second direction, the same effect can be achieved as in the evaporator 150 of FIG. 5.

In the evaporator 160, the second cell barrier members 165 are provided with through-holes 166, as in the evaporator 150 of FIG. 5. The through-holes 166 may protrude from surfaces of the second cell barrier members 165. A flue gas provided from a heat source flows into the first spaces 161.

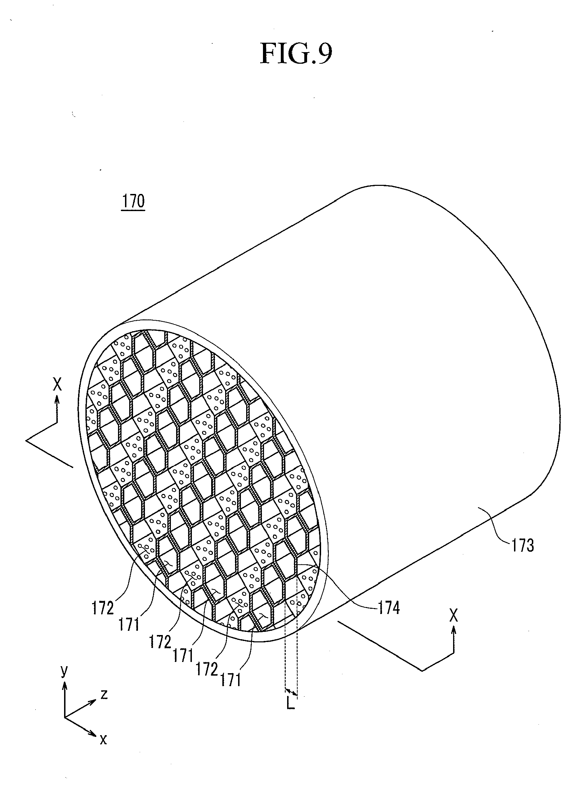

FIG. 9 is a perspective view of an evaporator for the fuel cell system according to an exemplary embodiment of the present invention. Referring to FIG. 9, the evaporator 170 has a hollow inner space of, which is divided into first spaces 171 and second spaces 172. A cross-section of the inner space is divided into a honeycomb structure. The first spaces 171 and the second spaces 172 have cross-sections of hexagonal shapes with the same sizes. The first spaces 171 are adjacent to the second spaces 172.

The evaporator 170 has a cylindrical body 173. The body 173 has a hollow inner space of, and a fluid flows in the hollow inner space along a length direction thereof, as an example. Cell barrier members 174 divide a cross-section of the inner space into the honeycomb structure. The inner space is divided into a plurality of spaces having a plurality of rows and layers. The spaces divided by the cell barrier members 174 include the first spaces 171 that allow a flow of a flue gas, and the second spaces 172 that allow a flow of water.

In the embodiment, a plurality of rows formed of the first spaces 171 and the second spaces 172 are stacked in a second direction (y axis direction in FIG. 9) when viewed in a cross-section of the body 173. The first spaces 171 and the second spaces 172 are alternately arranged by row in a first direction (x axis direction in FIG. 9). In FIG. 9, a first imaginary line of a first row is spaced from a second imaginary line of a second row at a predetermined gap (L in the FIG. 9) in the first direction. Here, the first row and the second row are adjacent to each other in the second direction. The first imaginary line passes through a center of one of the first or second spaces 171 and 172 of the first row and is formed along the second direction. A second imaginary line passes through a center of one of the first or second spaces 171 and 172 of the second row and is formed along the second direction.

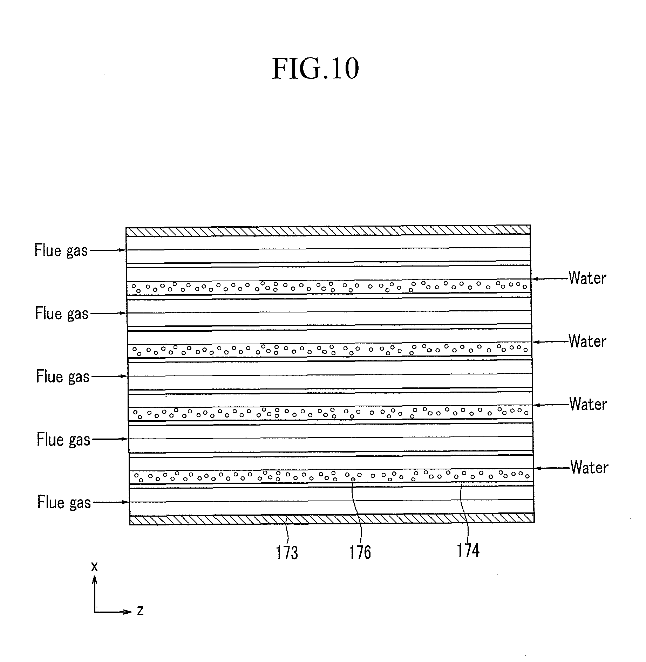

FIG. 10 is a cross-sectional view of the evaporator for the fuel cell system taken along line X-X shown in FIG. 9. As shown in FIGs. 9 and 10, the flue gas flows in the first spaces 171, and the water flows in the second spaces 172. The second cell barrier members 174 include at least one through-hole 176 formed on a portion dividing the second spaces 172. Thus, the water flowing in the adjacent second spaces 172 is easily mixed through the at least on through-hole 176.

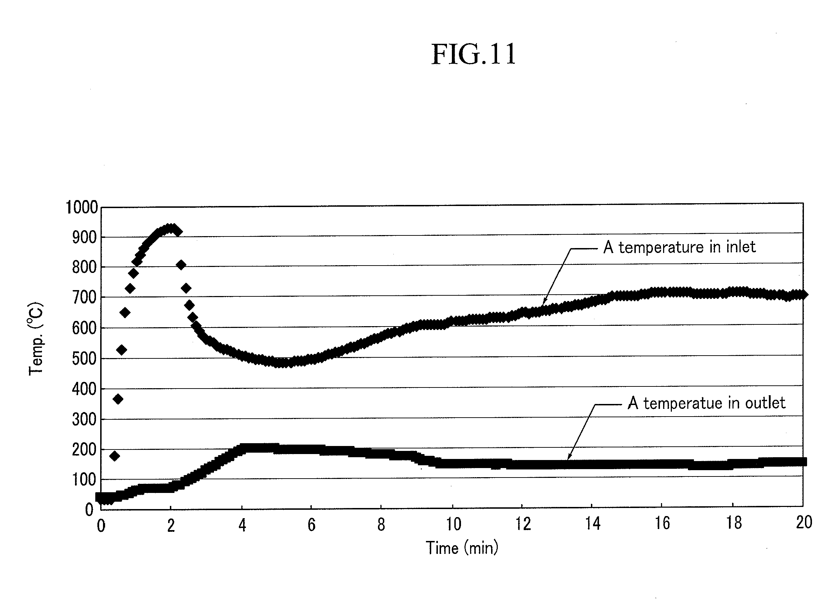

FIG. 11 is a graph showing a temperature of a flue gas passing through the evaporator for the fuel cell system according to the exemplary embodiment of the present invention shown in FIG. 9. In an experiment, a flue gas discharged from a heat source flowed into the evaporator, and water was supplied to the evaporator. Here, the flue gas was provided to the evaporator. The flue gas was discharged from the heat source by a combustion reaction as LPG at 450 ml/min. The flue gas and air at 18 l/min were continuously provided to the evaporator. The temperature of the flue gas in each of an inlet and an outlet of the evaporator was measured.
The data results shown in FIG. 11 were obtained. Referring to the graph, a temperature variation between the flue gas flowing into the evaporator and the flue gas discharged from the evaporator was about 550°C when the steam was generated stably. The steam was generated stably after about twenty minutes.

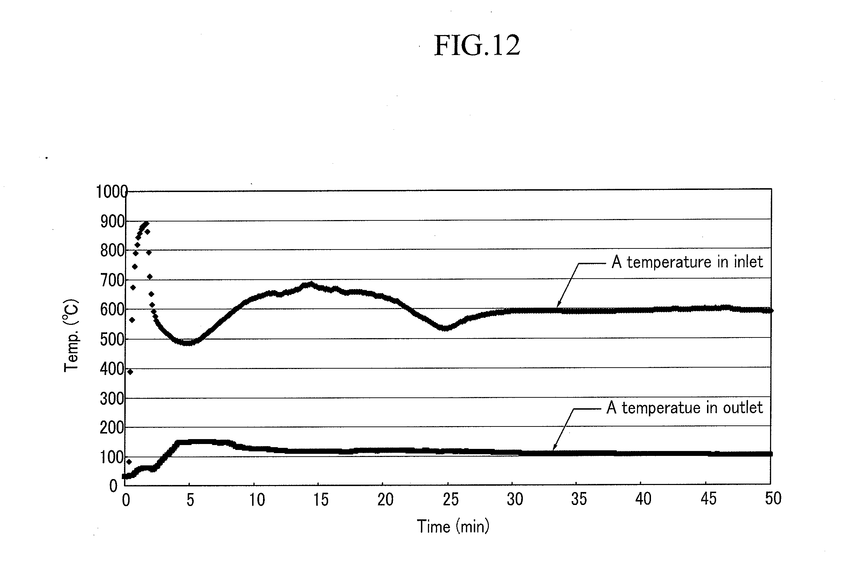

FIG. 12 is a graph showing a temperature of a flue gas passing through the evaporator for the fuel cell system according to the related art. In an experiment, a flue gas discharged from a heat source flowed into the evaporator, and water was supplied to the evaporator. The experimental conditions of the water supply and the flue gas supply were the same as in the experiment of FIG. 11. The temperature of the flue gas in each of an inlet and an outlet of the evaporator was measured.
The data results shown in FIG. 12 were obtained. Referring to FIG. 12, a temperature variation of the flue gas flowing into the evaporator and the flue gas discharged from the evaporator was about 500°C after about fifty minutes. That is, the temperature variation of the related art was smaller than that of the exemplary embodiments.

That is, as shown in FIGs. 11 and 12, the temperature variation in the evaporator 170 of the exemplary embodiment of FIG. 9 was larger than that of the plate-shaped evaporator according to the related art. In addition, in the evaporator 170 of the exemplary embodiment of FIG. 9, the temperature variation was achieved in less time. Accordingly, it can be seen that the evaporator according to the exemplary embodiment of FIG. 9 has higher heat transfer efficiency than the plate-shaped evaporator according to the related art.

Although a few embodiments of the present invention have been shown and described, it would be appreciated by those skilled in the art that changes may be made in this embodiment without departing from the principles of the invention, the scope of which is defined in the claims.

## Claims

1. An evaporator for a fuel cell system, comprising:
a body (133, 143, 153, 163, 173) having a hollow inner space through which fluid is arranged to flow; and
a plurality of cell barrier members (134, 135; 154, 155; 164, 165) dividing the hollow inner space into a plurality of spaces (131, 132; 141, 142; 151, 152; 161, 162; 171, 172), the cell barrier members being arranged to conduct heat between the plurality of spaces,
wherein the spaces comprise at least one first space (131, 141, 151, 161, 171) through which a flue gas is arranged to flow and at least one second space (132, 142, 152, 162, 172) through which water is arranged to flow.

2. The evaporator of claim 1, wherein the spaces are arranged in a plurality of rows and a plurality of columns.

3. The evaporator of claim 1 or 2, wherein the cell barrier members divide a cross-section of the inner space in a lattice shape or in a honeycomb structure.

4. The evaporator of any one of the preceding claims, wherein the at least one first space is adjacent to the at least one second space.

5. The evaporator of claim 4, wherein the at least one first space comprises a plurality of first spaces and the at least one second space comprises a plurality of second spaces, and the first spaces and the second spaces (131, 132; 141, 142; 151, 152, 161, 162) are alternately arranged in a first direction.

6. The evaporator of claim 5, wherein the first spaces and the second spaces (131, 132; 141, 142) are alternately arranged in a second direction which crosses the first direction.

7. The evaporator of claim 5, wherein the first spaces (151) are adjacently arranged in a second direction crossing the first direction, and the second spaces (152) are adjacently arranged in the second direction.

8. The evaporator of claim 7, wherein the cell barrier members (154, 155) comprise first cell barrier members (154) formed in the second direction and spaced from each other in the first direction, and second cell barrier members (155) formed in the first direction and spaced from each other in the second direction.

9. The evaporator of claim 5, wherein the first spaces (161) and the second spaces (162) are separated by the first cell barrier members (164) and are alternately arranged in the first direction, and
the second spaces (162) are divided by the second cell barrier members (165) and are adjacently arranged in the second direction.

10. The evaporator of claim 8 or 9, wherein the second cell barrier members (155, 165) include at least one through-hole (156, 166) formed in a portion of the second cell barrier members that separate the second spaces.

11. The evaporator of claim 10, wherein each of the at least one through-hole (156, 166) protrudes from a surface of the second cell barrier member.

12. The evaporator of claim 11, wherein the first spaces (151) are divided by the second cell barrier members (155) and are adjacently arranged in the second direction.

13. The evaporator of claim 3, wherein the cell barrier members divide a cross-section of the inner space in a honeycomb structure, wherein the at least one first space (171) is adjacent to the at least one second space (172); and
the at least one first space comprises a plurality of first spaces and the at least one second space comprises a plurality of second spaces, and
the first spaces and the second spaces are alternately arranged in a first direction to form a first row, wherein:
the first spaces and the second spaces are alternately arranged in the first direction to form a second row, and the second row is adjacent to the first row in a second direction crossing the first direction.

14. A fuel reforming apparatus, comprising:
a reforming reaction part for generating a reformed gas containing hydrogen from a fuel supplied thereto;
a heat source for generating heat energy by a combustion reaction and for providing the generated heat energy to the reforming reaction part, and
the evaporator of any one of the preceding claims for generating steam and providing the generated steam to the reforming reaction part.

15. The fuel reforming apparatus of claim 14, wherein the flue gas supplied to the at least one first space is generated by the heat source.
